(19) Europäisches Patentamt
European Patent Office
Office européen des brevets

(11) Veröffentlichungsnummer : **0 254 855 B1**

## (12) EUROPÄISCHE PATENTSCHRIFT

(45) Veröffentlichungstag der Patentschrift :
11.09.91 Patentblatt 91/37

(51) Int. Cl.⁵ : **H04Q 11/04, H04Q 3/545**

(21) Anmeldenummer : 87108702.9

(22) Anmeldetag : 16.06.87

(54) Schaltungsanordnung für zentralgesteuerte Zeitmultiplex-Fernmeldevermittlungsanlagen, insbesondere PCM-Fernsprechvermittlungsanlagen, mit an ein Koppelfeld angeschlossenen Anschlussgruppen.

(30) Priorität : 03.07.86 DE 3622369

(43) Veröffentlichungstag der Anmeldung :
03.02.88 Patentblatt 88/05

(45) Bekanntmachung des Hinweises auf die Patenterteilung :
11.09.91 Patentblatt 91/37

(84) Benannte Vertragsstaaten :
AT BE CH DE FR GB IT LI NL SE

(56) Entgegenhaltungen :
EP-A- 0 125 602
EP-A- 0 236 779
WO-A-83/01549
FR-A- 2 353 193
PROCEEDINGS OF THE INTERNATIONAL SWITCHING SYMPOSIUM, Montreal, 21.-25. September 1981, "session" 23 C, "paper" 2, Seiten 1-7; W. STROBELT: "Digital switching in private networks"
PROCEEDINGS OF THE INTERNATIONAL SWITCHING SYMPOSIUM, Montreal, 21.-25. September 1981, "session" 13 A, "paper" 2, Seiten 1-7; D. JACKSON et al.: "Impacts of multiprocessing on GTD-5 EAX call processing and operating system software"
NATIONAL TELECOMMUNICATIONS CONFE-RENCE, New Orleans, Louisiana, 29. Novem-ber - 3. Dezember 1981, "paper" D5-4, Seiten 1-5, IEEE; D.L. JACKSON et al.: "GTD-5 EAX RSU survivabilty"
PROCEEDINGS OF THE INTERNATIONAL SWITCHING SYMPOSIUM, Montreal, 21.-25. September 1981, "session" 13 A, "paper" 1, Seiten 1-4; P.W. BASSETT et al.: "GTD-5 EAX: recovery and diagnostic aspects of a multipro-cessor system"
PROCEEDINGS OF THE INTERNATIONAL SWITCHING SYMPOSIUM, Montreal, 21.-25. September 1981, "session" 14 A, "paper" 1, Seiten 1-9; M. BALLARD et al.: "The E10.S-TSS.5: a multipurpose digital switching sy-stem"

(56) Entgegenhaltungen :
AT & T BELL LABORATORIES RECORD, Mai 1985, Seiten 22-26, Murray Hill, New Jersey, US; H.J. BEUSCHER et al.: "Electronic twins protect 5ESStm switch operations"
PROCEEDINGS OF THE NATIONAL ELECTRO-NICS CONFERENCE, Rosemont, Illinois, 24.-26. September 1984, Seiten 48-52; M.J. GO-LASZEWSKI: "Software recovery in a distribu-ted processing system"
IEEE GLOBAL TELECOMMUNICATIONS CON-FERENCE, New Orleans, Louisiana, 2.-5. De-zember 1985, Band 2, "paper" 29.6, Seiten 1-4, IEEE; G. CHAHIL: "System Initialization in a distributed digital switch"
N.E.C. RESEARCH & DEVELOPMENT, Nr. 64, Januar 1982, Seiten 86-92, Tokyo, JP; A. KITA-MURA et al.: "NEAX 61 digital remote swit-ching system"
PROCEEDINGS OF THE INTERNATIONAL SWITCHING SYMPOSIUM, Montreal, 21.-25. September 1981, "session" 34 A, "paper" 3, Seiten 1-9; F.J. SCHRAMEL et al.: "The peri-pheral control domain, an all-digital intelligent terminal for subscribers and trunks in the PRX/D system"

(73) Patentinhaber : Siemens Aktiengesellschaft
Wittelsbacherplatz 2
W-8000 München 2 (DE)

(72) Erfinder : Junge, Uwe, Ing. (grad.)
Sulenstrasse 5
W-8000 München 71 (DE)
Erfinder : Seeger, Helmut, Dipl.-Ing.
Stobäustrasse 42
W-8190 Wolfratshausen (DE)
Erfinder : Maher, Anthony, Dipl.-Ing.
Karwendelstrasse 39
W-8000 München 70 (DE)
Erfinder : Leichum, Axel, Dipl.-Ing.
Konrad-Celtis-Strasse 74
W-8000 München 70 (DE)

**Beschreibung**

Die Erfindung bezieht sich auf eine Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld samt einem unter anderem dessen Steuerung sowie einer hierfür erforderlichen Schaltkennzeichenverarbeitung dienenden programmgeteuerten zentralen Prozessor zur Ersatzschaltemöglichkeit (stand-by-Betrieb) zweifach vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit einer dezentralen programmierbaren Steuereinrichtung zur Schaltkennzeichenaufnahme von diesen Leitungen, zur Schaltkennzeichenvorverarbeitung und -weiterleitung an den zentralen Prozessor und zur Schaltkennzeichenaussendung auf diese Leitungen ausgestattet ist, und in denen in jeder dieser Anschlußgruppen das jeweilige Teilkoppelfeld innenseitig über zwei Gruppen von Linkleitungen gruppenweise getrennt mit Koppelfeldanschlüssen einerseits des einen und andererseits des anderen der beiden parallel vorgesehenen Koppelfelderverbunden ist, und in denen für einen der obigen Schaltkennzeichenbehandlung dienenden sowie der Übertragung von Programm- und Vermittlungs-Software dienenden Datenaustausch zwischen den dezen-Hes I Phl / 2.7.1986 tralen Steuereinrichtungen einerseits und dem jeweils betriebsbereiten bzw. betriebsvorbereitenden Prozessor andererseits Datenverbindungen jeweils pro dezentrale Steuereinrichtung von jenem über das ihm zugeordnete Koppelfeld zu den dezentralen Steuereinrichtungen in betriebsbereiten Zustand gebracht bzw. in ihm gehalten werden, wofür eine mit dem zentralen Prozessor verbundene Eingabe-Ausgabe-Einrichtung vorgesehen ist, die mit einer Mehrzahl und zwar pro Datenverbindung vorgesehenen Link-Anschlüssen einzeln wie die Link-Leitungen mit Koppelfeldanschlüssen fest verbunden ist.

Eine Schaltungsanordnung dieser Art ist bereits durch die Zeitschrift "telcom report", Beiheft 1981, insbesondere Seiten 7 ff, 19 ff und 49 ff bekannt. Auf Seite 19 ff sind u.a. die Teilkoppelfelder der peripheren Anschlußgruppen dargestellt und beschrieben (GS). Innenseitig sind sie mit dem gedoppelten zentralen Koppelfeld ("Koppelnetz") verbunden und außenseitig über Anschlußeinheiten (LTU/DIU) mit Analogleitungen bzw. -Kanälen von Digitalübertragungssystemen. Diese Leitungen bzw. Kanäle führen (soweit sie nicht Teilnehmerleitungen bzw. für Teilnehmeranschlüsse vorgesehene Kanäle sind) zu den anderen Vermittlungsstellen und sind zur Verbindungsherstellung verbindungsindividuell in bekannter Weise belegbar.

Auf Seite 8 sind die über das gedoppelte Koppelfeld in betriebsbereitem Zustand ständig durchgeschalteten Steuerkanäle beschrieben. Das zentrale Koppelfeld und der zentrale Prozessor sind also aus Sicherheitsgründen gedoppelt. Diese Doppelung fällt im Blick auf die Gesamtheit einer derartigen Vermittlungsstelle nicht besonders ins Gewicht, weil sie nur wenige zentrale Bestandteile betrifft. Die peripheren Anschlußgruppen und die zu ihnen gehörenden Bestandteile, wie zum Beispiel dezentrales Steuerwerk und Teilkoppelfeld, die in größerer Anzahl und folglich in vergleichsweise relativ großem Umfang vorhanden sind, sind deshalb nicht gedoppelt. Bei einem Ausfall einer Anschlußgruppe (zum Beispiel ihres Teilkoppelfeldes oder ihrer dezentralen Steuereinrichtung oder ihrer Stromversorgung) ist hiervon ein relativ so kleiner Teil der Gesamtheit der angeschlossenen Teilnehmerleitungen und Verbindungsleitungen betroffen, daß eine vorübergehende Betriebsunterbrechung, die sich also auf diese beschränkt, hingenommen wird.

Bei den genannten Steuerkanälen handelt es sich um die eingangs genannten Datenverbindungen, die für den sowohl der Verarbeitung von in den Anschlußgruppen eintreffenden Informationen im zentralen Prozessor, als auch der Übertragung von Programm- und Vermittlungs-Software vom zentralen Prozessor an die dezentralen Steuerwerke dienenden Datenaustausch vorhanden sein müssen, welcher also zwischen den dezentralen Steuereinrichtungen einerseits und dem zentralen Prozessor andererseits abgewickelt wird, und die hierfür in betriebsbereiten Zustand gebracht bzw. ständig in ihm gehalten werden. Auf Seite 25 der erwähnten Zeitschrift wird detailliert beschrieben, wie zum Start des Vermittlungsbetriebes die dezentralen Steuereinrichtungen über diese Steuerkanäle mit Programmen und festen Daten vom zentralen Prozessor geladen werden. Solche Ladeprozeduren sind für jede der dezentralen Steuereinrichtungen durchzuführen. Die Durchführung dieser Ladeprozeduren ist nicht nur im Einschaltefall (Start des Vermittlungsbetriebes), sondern auch im Ersatzschaltefall erforderlich, wenn also der mit einem der beiden parallelen Koppelfelder und einem der beiden zentralen Prozessoren, das heißt dem betreffenden zentralen Koppelfeld zugeordneten zentralen Prozessor, laufende Vermittlungsbetrieb anstatt mit diesem zentralen Koppelfeld und diesem zentralen Prozessor mit dem jeweils anderen zentralen Prozessor fortgeführt wird.

Solche Ersatzschaltefälle werden insbesondere bei Eintreten von Störungen oder Auftreten von Fehlern, also meistens unvorhersehbar erforderlich. Fehler und Störungen können so gravierend sein, daß eine unverzügliche Ersatzschaltung notwendig ist. Häufig jedoch betreffen solche Fehler und Störungen nur Teile der gesamten Vermittlungsanlage, zum Beispiel nur einen Teil des zentralen Koppelfeldes oder nur bestimmte Funktionen in demselben oder im zentralen Prozessor oder sie treten sporadisch auf. In solchen Fällen, das heißt den meisten notwendig werdenden Ersatzschaltefällen, läßt sich die betreffende Ersatzschaltemaßnahme auch noch kurzzeitig hinausschieben.

Da die mit einer Ersatzschaltung verbundenen, oben erwähnten Ladevorgänge größere Datenmengen umfassen und pro dezentrale Steuereinrichtung durchzuführen sind, sind sie relativ zeitaufwendig. Da diese Ladevorgänge vollständig abgewickelt sein müssen, bevor mit dem Vermittlungsbetrieb selbst begonnen werden kann, haben Ersatzschaltemaßnahmen mitunter eine unvorteilhaft lange Betriebsunterbrechung zur Folge.

Bei einer etwas anders strukturierten Fernmeldevermittlungsstelle (FR-A-2 353 193) enthält eine zentrale Gesprächsverarbeitungseinheit eine Vielzahl von Prozessoren sowie eine Reihe von Reserveprozessoren, die jeweils im Ersatzschaltfall die Rolle eines der Prozessoren der genannten Vielzahl von Prozessoren übernehmen können. Wegen der vorgenannten Unterteilung in relativ kleine Einheiten betreffen die in diesem Fall erforderlichen Ladevorgänge relativ kleine Datenmengen, so daß der erforderliche Zeitaufwand hingenommen werden kann. Dafür ist aber der Hardware- und Steuerungaufwand unverhältnismäßig hoch.

Für die Erfindung besteht deshalb die Aufgabe, in einer Schaltungsanordnung der eingangs angegebenen Art die Betriebsbedingungen für Ersatzschaltemaßnahmen günstiger zu gestalten und unvorteilhaft lange Betriebsunterbrechungen zu vermeiden, ohne daß hierfür vermehrter Hardware-Aufwand getrieben werden muß.

Die Erfindung löst die gestellte Aufgabe dadurch, daß jeweils zwei Anschlußgruppen paarweise einander zugeordnet sind, daß in jeder derselben zum außenseitigen Anschluß von Teilnehmer- und/oder Verbindungs-Leitungen dienenden und innerhalb der jeweiligen Anschlußgruppe im Normalbetrieb mit ihrem Teilkoppelfeld verbundene Anschlußeinheiten, zum Beispiel Teilnehmeranschlußschaltungen, Mehrfachteilnehmeranschlußschaltungen, Verbindungsleitungs (-mehrfach-)abschlußschaltungen und dergleichen, im Notbetrieb teilweise umschaltbar sind, wodurch die Anschlußeinheiten jeweils einer ersten dieser beiden Anschlußgruppen notbetriebsbedingt zusätzlich an das Teilkoppelfeld der jeweils anderen, also einer jeweils zweiten Anschlußgruppe angeschaltet werden, und wodurch für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird, und daß eine Ersatzschaltung eines der beiden zentralen Prozessoren noch während zunächst weiterlaufendem Betrieb durch den anderen der beiden Prozessoren dadurch vorbereitet wird, daß sowohl sämtliche paarweise einander zugeordneten Anschlußgruppen vom Normalbetrieb in den Notbetrieb übergeführt werden, als auch der andere zentrale Prozessor Datenverbindungen über das ihm zugeordnete zentrale Koppelfeld zu den dezentralen Steuereinrichtungen aller ersten Anschlußgruppen in betriebsbereiten Zustand bringt und anschließend nacheinander an die dezentralen Steuereinrichtungen die für ihren Betriebsbeginn erforderliche Programm- und Vermittlungs-Software zur Speicherung in ihnen überträgt, und daß nach erfolgter Ersatzschaltung [einfügen des Alschnittes von Anspruch 1, der auf Anspruchsseite 3 steht]

Die Erfindung schafft die Möglichkeit, unter Fortführung des Vermittlungsbetriebes bei eingeschränkter Verkehrsleistung hinsichtlich der Leistung der Verbindungsherstellungsfunktionen die Dauer der in Zusammenhang mit einer Ersatzschaltung von zentralem Prozessor und zentralem Koppelfeld bedingten völligen Betriebsunterbrechung ganz wesentlich zu verkürzen. Die Beschränkung der Verkehrsleistung besteht während einer Übergangszeit.

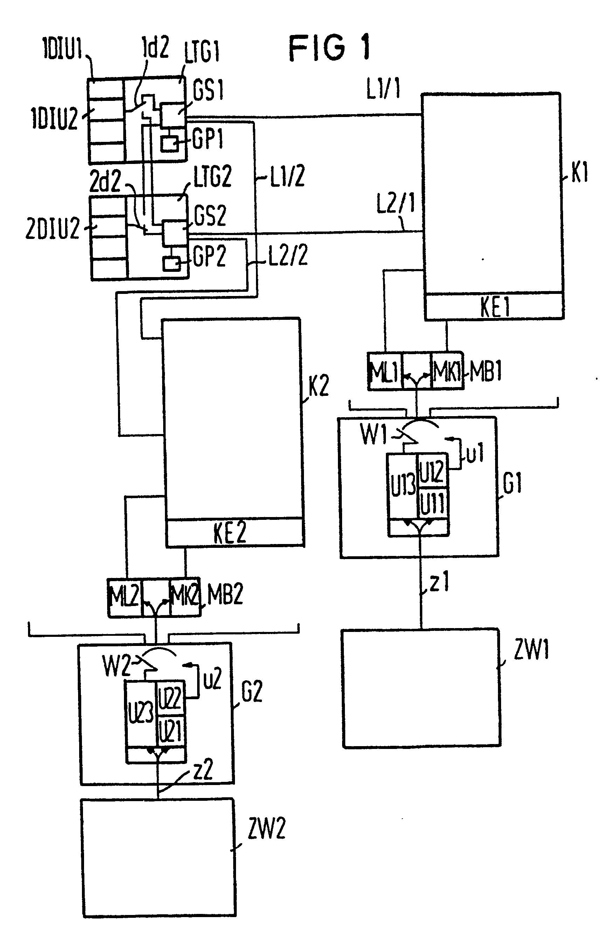

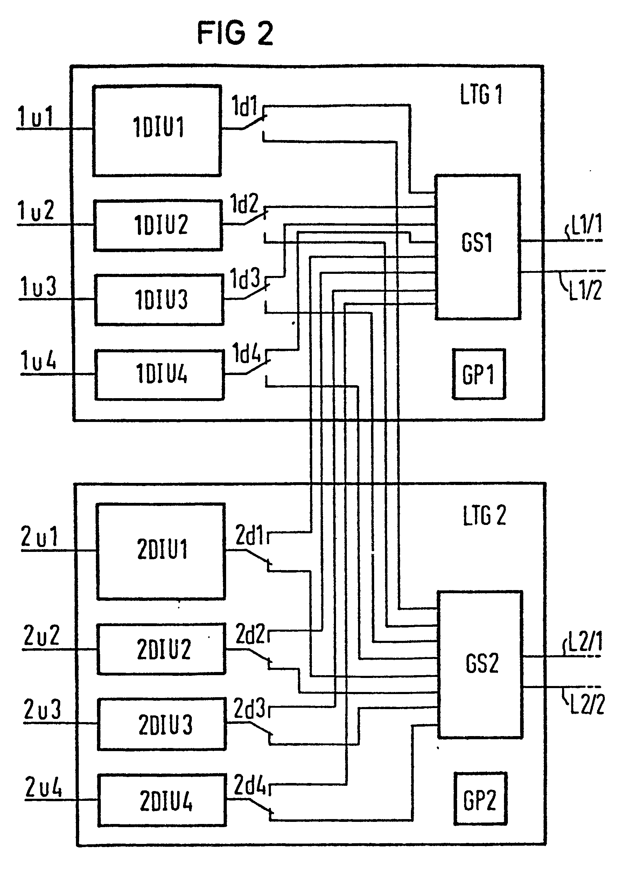

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift 3 128 365 (VPA 81 P 6257) beschrieben ist. Figur 2 zeigt weitere erfindungswesentliche Details.

Bevor die Beschreibung speziell auf die erfindungswesentlichen Besonderheiten des Ausführungsbeispieles eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten zeitschrift "telcom report". Hierin sind unter anderem auf Seite 19 ff periphere Anschlußgruppen in diesem Fernsprechvermittlungssystem beschrieben. Wie es ähnlich auch in Bild 1 auf seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1 L2/1, L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfeldern K1/K2 je ein zentraler Prozessor ZW1 bzw. ZW2 vorgesehen, mit dessen Hilfe die gesamte Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen in dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 die Rede.

Den vom zentralen Prozessor ZW1 an die genannten Anschlußgruppen zu übertragenden Informationen, die auch Abrufbefehle zum Abruf von von den Anschlußgruppen bzw. von den Anschlußeinheiten zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit vom zentralen Prozessor ZW1 anzusteuern zwecks Übertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungn, zum Beispiel GP1, GP2, andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen. Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U1/U2 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronischen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital- Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist im einzelnen beschrieben, welchem Zweck die genannten Anschlußeinheiten dienen. Eine Anschlußeinheit ist bei Analog-Teilnehmerleitungen bzw. Analog-Verbindungsleitungen jeweils für eine Mehrzahl von Leitungen vorgesehen. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme, von denen jedes einer anderen Verkehrsrichtung zugeordnet sein kann, die aber auch zu zweit oder zu mehreren jeweils gemeinsam ein und derselben Verkehrsrichtung zugeordnet sein können) insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß Zeitmultiplex-Leitungen störungsbedingt ausfallen können, was also auch für die Zeitmultiplex-leitungen L1/1, L1/2, L2/1 und L2/2 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur ein einziges Übertragungssystem pro Verkehrsrichtung vorgesehen zu werden braucht, würde bei Ausfall der einen Anschlußgruppe mit dem zentralen Koppelfeld verbindenden Zeitmultiplex-Leitung auch das betreffende einzige Übertragungssystem pro Verkehrsrichtung ausfallen. Gleiches gilt bei Ausfall der dezentralen Steuereinrichtung zum Beispiel GP1, einer Anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 und 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anschlußgruppe LTG1 bzw. LTG2 verbunden sind, im Notbetrieb einer dieser beiden Anschlußgruppen, zum beispiel LTG2, zu der Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprehenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation aufgrund eines störungsbedingten Ausfalles der Zeitmultiplex-Leitung L2 aus ihrer dargestellten Ruhelage in ihre Arbeitslage umgeschaltet, so sind von diesem Zeitpunkt an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden.

Bei einer in der zuvor beschriebenen Weise durchgeführten Umschaltung werden natürlich die bis dahin über Kanalpaare der Zeitmultiplex-Leitung L2 bestehenden Verbindungen unterbrochen. Es kann aber auch vorgesehen werden, daß für den Fall, daß diejenigen Kanäle, die für Nachrichtenverbindungen (zum Beispiel Sprechverbindungen) belegt sind, nicht mitbetroffen sind von der eingetretenen Störung, die entsprechenden bereits bestehenden Verbindungen bestehen bleiben. Dies aber wird in aller Regel ohnehin der Fall sein, und zwar alleine aufgrund des Eintretens derjenigen Betriebsstörung, die Veranlassung zu der anschließenden Umschaltung gegeben hat. In an sich bekannter Weise erhalten die beteiligten Teilnehmer ein entsprechendes Hörzeichen, zum Beispiel Besetztton, und sie können die gewünschten Verbindungen dann erneut aufbauen. Entsprechendes gilt für den Fall einer Rück-Umschaltung von der Notbetriebs-Situation zu der Normalbetriebs-Situation, zum Beispiel also, wenn die Umschalter 2d1 bis 2d4 wieder in ihre dargestellte Ruhelage zurückgeführt werden. Auch in diesem Falle werden bestehende Verbindungen unterbrochen und müssen bzw. können von den betreffenden Teilnehmern neu aufgebaut werden, es sei denn, daß - wie zuvor angegeben - die betreffenden Verbindungen bestehen bleiben können. - Entsprechendes gilt umgekehrt für den Fall, daß anstatt der Anschlußgruppe LTG1 die Anschlußgruppe LTG2 aus der Normalbetriebs-Situation in die Notbetriebs-Situation übergeht und umgekehrt.

Geht eine Anschlußgruppe, zum Beispiel die Anschlußgruppe LTG2, in der beschriebenen Weise aus der Normalbetriebs-Situation in die Notbetriebs-Situation über, so können sämtliche Kanalpaare, die von den Übertragungssystemen 1u1 bis 2u4 umfaßt werden, nur noch über die Zeitmultiplex-Leitung L1 bzw. deren Kanalpaare weitervermittelt werden. Dies geschieht in der Zeitmultiplex-Koppeleinrichtung GS1 in an sich bekannter Weise (was die Durchschaltevorgänge innerhalb dieser Zeitmultiplex-Koppeleinrichtung selber anbetrifft). Infolgedessen trifft auf die jeweilige Zeitmultiplexleitung zum Beispiel L1/1 in der Umschalte-Situation (bezüglich der Umschalter 2d1 bis 2d4) eine wesentlich höhere Verkehrsbelastung.

Da sich bekanntlich grundsätzlich über die Kanalpaare dieser Zeitmultiplex-Leitung L1 zahlenmäßig nicht mehr Verbindungen zu jedem Zeitpunkt durchschalten lassen, als Kanalpaare überhaupt vorhanden sind, können die Kanalpaare der Übertragungssysteme 1u1 bis 2u4 nur noch mit etwa der halben Verkehrsbelastung ausgelastet werden. Das bedeutet, daß im Mittel die Kanalpaare bei jeder dieser Übertragungssysteme 1u1 bis 2u4 zum Teil nicht benutzt werden können.Jedoch ist sichergestellt, daß jedes dieser Übertragungssysteme überhaupt weiterbetrieben werden kann. Dadurch gibt es für jede der betreffenden Verkehrsrichtungen noch Verbindungsmöglichkeiten, wenngleich diese zahlenmäßig eingeschränkt sind. Es muß also keine Verkehrsrichtung überhaupt ausfallen, wenn eine der Zeitmultiplex-Leitungen L1/1, L1/2, L2/1, L2/2 (oder eine andere) störungsbedingt ausfällt. Wie im bekannten Falle sind die Zeitmultiplex-Anschlußleitungen L1/1, L1/2 und L2/1, L2/2 von jeder der Anschlußgruppen (LTG1, LTG2) zum Koppelfeld gedoppelt, ebenso wie das Koppelfeld selber (s.o.!), und jede Anschlußgruppe ist über die eine und die andere Zeitmultiplexleitung einzeln mit dem einen und dem anderen dieser beiden Koppelfelder verbunden. Bei Auftreten von Fehlern an zentraler Stelle, zum Beispiel im Koppelfeld K1, erfolgt eine Umschaltung.

In diesem Zusammenhang kann auch vorgesehen werden, daß die Notbetriebs-Situation auch dahingehend ausgewertet wird, daß von den Kanalpaaren jedes der Übertragungssysteme 1u1 bis 2u4 die Hälfte gesperrt wird. Die gesperrten Kanalpaare sind dann für Neubelegungen für neu herzustellende Verbindungen unzugänglich, solange die Notbetriebs-Situation fortbesteht. Es ist auch möglich, die Notbetriebs-Situation zu denjenigen Vermittlungsstellen hin zu melden, mit denen die jeweilige Vermittlungsstelle über die betreffenden Übertragungssysteme 1u1 bis2u4 verbunden ist. Es kann vorgesehen werden, daß auch in diesen anderen Vermittlungsstellen die betreffenden Übertragungssysteme hinsichtlich der in ihnen enthaltenen Kanalpaare zum Teil als gesperrt markiert werden, bis der Zustand der Notbetriebs-Situation wieder beendet wird. Hierdurch möge auch in anderen Vermittlungsstellen (ebenso wie in der unmittelbar betroffenen Vermittlungsstelle) die Wegesuche sowie die Leitweglenkung beeinflußt werden, zum Beispiel hinsichtlich einer entsprechenden Änderung des Wegesuchprogrammes und/oder der jeweils geltenden und praktisch hinsichtlich der Wegeauswahl zum Tragen kommenden Leitwegeregeln.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über Jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, zum Beispiel LTG2, bzw. deren Gruppensteuereinrichtung, zum Beispiel GP2, die beim Normalbetrieb derselben im zentralen Prozessor gesperrten Notbetriebs-Adressen'der betreffenden Anschlußeinheiten, zum Beispiel 2DIU1 bis 2DIU4, entsperrt und stattdessen die Normalbetriebs-Adressen dieser Anschlußeinheiten gesperrt werden. Auf nicht im einzelnen dargestellte Weise wird also dem zentralen Prozessor gemeldet, daß eine Anschlußgruppe, zum Beispiel LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsynchron laufen, zu der hin die jeweilige Umschaltung erfolgt ist. In der gleichen Weise kann auch die Versorgung mit den erforderlichen Betriebsspannungen für die betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, das heißt ausfallsicher auszuführen, zum Beispiel zweifach für alle Anschlußeinheiten der beiden Anschlußgruppen.

Teilweise abweichend von dem zuvor Beschriebenen kann auch vorgesehen sein, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt. Dies wurde bereits erwähnt. Mit Hilfe deseersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgruppe erfolgt in der angegebenen Weise dadurch, daß anhand des ersten Adressenteils eine Einstellinformation im Adressen-Signal-Umsetzer U11/U12 gebildet wird, die über den Steuerweg u dem elektronischen Wähler W1 zugeführt wird, wodurch die Eingabe-Ausgabe-Einrichtung G1 über die Puffereinrichtung MB1 mit demjenigen über das Koppelfeld K1 im durchgeschalteten Zustand bereitgehaltenen Signalkanal verbunden wird, der über eine Zeitmultiplexleitung, zum Beispiel L1/1 zu der betreffenden Anschlußgruppe hin führt. Es ist also ein Adressen-Signalkanal-Umsetzer G1 im zentralen Prozessor vorgesehen, der bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt. Diese Signalkanalnummer bezeichnet also den zuvor genannten betreffenden Signalkanal. Diese Signalkanalnummer dient als Einstellinformation, die über den Signalweg u1 zu dem genannten elektronischen Wähler W1 hin zu dessen Einstellung auf den betreffenden Signalkanal weitergegeben wird. Dieser elektronsiche Wähler kann in jeder beliebigen Weise auch als Koppler ausgebildet sein.- Der Adressen-Signalkanal-Umsetzer G1 im zentralen Prozessor ZW1 kann selbstverständlich auch räumlich gesondert von diesem (wie in Figur 1 dargestellt) vorgesehen sein, kann aber auch Bestandteil desselben sein. Er dient im übrigen in an sich bekannter Weise der Abwicklung der Eingabeprozeduren und Ausgabeprozeduren des zentralen Prozessors ZW1.

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, zum Beispiel GS1, zunächst zu der betreffenden dezentralen Steuereinrichtung, zum Beispiel GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, zum Beispiel LTG1, diejenige ist, zu welcher hin die betreffende Information weiterzuleiten ist. Es sei angenommen, daß dies die Anschlußeinheit 1DIU2 sei. Weiterhin sei angenommen, daß sich die betreffende Anschlußgruppe, zum Beispiel LTG1 im Normalbetriebszustand befindet. In diesem Falle ist also der Umschalter 1d2 in der in Figur 1 dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten ist. Aufgrund dessen steuert die dezentrale Steuereinrichtung GP1 die Zeitmultiplex-Koppeleinrichtung GS1 so, daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber, und daß sie anhand derselben einen direkten Übertragungsweg für die Information von dem über die Zeitmultiplex-Leitung L1/1 verlaufenden Signalkanal über die Zeitmultiplex-Koppeleinrichtung GS1 und die Ruheseite des Umschalters 1d2 zur Anschlußeinrichtung 1DIU2 durchschaltet. In diesem Falle wird also die Adresse über den Signalkanal in der dezentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtung GP1 entfallen.

In diesem Zusammenhang ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift 3 106 903 im einzelnen beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in ihre Arbeitslage umgelegt. Dies kann auf zweierlei Weise erfolgen. Es kann vorgesehen sein, daß die aufgetretene Betriebsstörung innerhalb der von ihr betroffenen Anschlußgruppe selber erkannt wird. Dies kann dadurch geschehen, daß der der ständigen Überprüfung der vollen Funktionsfähigkeit jeder der Anschlußgruppen dienende Datenaustausch mit dem zentralen Prozessor gemäß der zuletzt genannten deutschen Offenlegungsschrift nicht mehr stattfindet, und daß dies innerhalb der betreffenden Anschlußgruppe erkannt wird. Aufgrund dessen kann die erwähnte Betätigung der Umschalter 2d1 bis 2d4 innerhalb der betreffenden Anschlußgruppe durch ihre dezentrale Steuereinrichtung, zum Beispiel GP2 selber vorgenommen werden. Jedoch kann auch vorgesehen sein, daß der zentrale Prozessor ZW1 die die Anschlußgruppe LTG2 betreffende Betriebsstörung erkennt, und daß er eine entsprechende Information hierüber an die dezentrale Steuereinrichtung GP1 der paarweise zugeordneten Anschlußgruppe LTG1 überträgt, und daß diese dann einen Befehl zur Betätigung der genannten vier Umschalter in der Anschlußgruppe LTG2 an diese überträgt.

Im Zustand der die Anschlußgruppe LTG2 betreffenden Betriebsstörung sind also die Umschalter 2d1 bis 2d4 betätigt. Dementsprechend sind die Anschlußeinheiten 2DIU1 bis 2DIU4 mit der Zeitmultiplex-Koppeleinrichtung GS1 der Anschlußgruppe LTG1 verbunden.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 21DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronischen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronischen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebes der Anschlußgruppe LTG2 ab. Im Adressen-signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuereinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit, für die die Information bestimmt ist. Aufgrund des ersten Adressenteils und aufgrund des zweiten Adressenteils leitet die dezentrale Steuereinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, zum Beispiel 2d2. Auch in diesem Falle kann die betreffende Information in der dezentralen Steuereinrichtung GP1 zwischengespeichert werden und dann von ihr aus zu der betreffenden Anschlußeinheit, zum Beispiel 2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die zuvor beschriebene Weise können sowohl Informationen vom zentralen Prozessor zu jeder der Anschlußeinheiten, als auch in umgekehrter Richtung übertragen werden. Im letzterem Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3 128 365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW1 nicht selber aufgenommen werden müssen, sondern nach Ankunft von einer Anschlußeinheit in der Eingabe-Ausgabe-Einrichtung G1 von hier aus direkt zu der betreffenden Anschlußeinrichtung übertragen werden,für die sie bestimmt sind. Dies ist möglich durch die in der zuletzt angegebenen Patentschrift beschriebene Weiterleitung der Informationen innerhalb der Eingabe-Ausgabe-Einrichtung G1.

Nachdem die Beschreibung des in den Zeichnungen auszugsweise dargestellten Ausführungsbeispieles der Erfindung eine Zeitmultiplex-Fernsprechvermittlungsanlage, in der die Erfindung angewendet ist, in allgemeineren Zusammenhängen beschrieben hat, wendet sie sich nun den erfindungswesentlichen Zusammenhängen in besonderer Weise zu. Wie bereits aus dem bisherigen Teil der Beschreibung hervorgeht, ist ein der Verbindungsdurchschaltung dienendes zentrales Koppelfeld K1/K2 zweifach vorgesehen. Ebenso zweifach ist ein zentraler Prozessor ZW1/ZW2 vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozesor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Dopplung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist, daß eine Mehrzahl von dezentralen Anschlußgruppen mit je einem Teilkoppelfeld zum außenseitigen Anschluß von Verbindugns- und/oder Teilnehmerleitungen, bzw. entsprechenden Kanälen, und mit einer dezentralen programmierbaren Steuer-einrichtung zur Schaltkennzeichenaufnahme von die-sen Leitungen, zur Schaltkennzeichenvorve-rarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 angeschlossen, die zu den beiden zentralen Koppelfeldern K1 und K2 führen. Jede dieser Zeitmultiplexleitungen umfaßt - wie bereits ebenfalls weiter oben erläutert wurde - eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist -, daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betreibsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilauf-gebaute Verbindungswege eintreffende Schalt-kennzeichen, die über die dezentralen Anschlußgruppen eintreffen, dem jeweiligen zentralen Prozessor nach einer Vorverarbeitung der jeweiligen dezentralen Steuereinrichtung zugeführt werdne, wodurch dieser Einstellinformationen für sein zentrales Koppelfeld sowie Schaltkennzeichen und Steuerinformationen erarbeitet, die zur Aussendung über die betreffenden Verbindungen dem jeweiligen dezentralen Steuerwerk wieder zugeleitet werden und hier zur Aussendung kommen und/oder zur Anschaltung von Hörtonsignalen, Rufsignalen und dergleichen für die betreffenden Teilnehmer führen. Der für diese Schaltkennzeichenbehandlung dienende Datenaustausch zwischen Jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, sofern das Koppelfeld K1 und der zentrale Prozesor ZW1 sich zur Zeit in Betrieb befindet.

Die genannten Datenverbindungen zwischen jeder der dezentralen Steuereinrichtungen jeder der Anschlußgruppen einerseits und dem jeweils in Betrieb befindlichen zentralen Prozessor dienen nicht nur für den genannten, zur Abwicklung der erwähnten Schaltkennzeichenbehandlung durchgeführten Datenaustausch, sondern diese Datenverbindungen dienen auch dazu, daß beim Inbetriebgehen eines zentralen Prozessors und des ihm zugeordneten zentralen Koppelfeldes, dieser zentrale Prozessor Programm- und Vermittlungs-Software an sämtliche dezentralen Steuereinrichtungen sämtlicher Anschlußgruppen überträgt. Dies wird auch als "Laden" bezeichnet und ist in großer Ausführlichkeit in der bereits genannten Zeitschrift "telcom report", Beiheft 1981, insbesondere Seite 19 ff beschrieben. Hierzu ist im Falle des vorliegenden beschriebenen Ausführungsbeispiels eine mit dem zentralen Prozessor, zum Beispiel ZW1, verbundene Eingabe-Ausgabe-Einrichtung, zum Beispiel G1, vorgesehen, an die mehrere Daten-Pufferspeichereinrichtungen, zum Beispiel MB1, angeschlossen sind; von jeder derselben führt eine Mehrzahl von Datenverbindungen über das betreffende Koppelfeld, zum Beispiel K1, zu den dezentralen Steuereinrichtungen der genannten Anschlußgruppen. Diese Daten-Pufferspeicher sind mit Link-Anschlüssen einzeln wie die Link-Leitungen mit Anschlüssen des Koppelfeldes fest verbunden. Wie bereits ausgeführt wurde, ist eine Link-Leitung und dementsprechend auch ein Link-Anschluß jeweils durch ein Kanalpaar realisiert. Die Kanalpaare gehören zu den an das Koppelfeld K1bzw. K2 angeschlossenen Zeitmultiplexleitungen.

Die für den Vermittlungsbetrieb erforderlichen und in den dezentralen Steuereinrichtungen zu speichernden vermittlungstechnischen Informationen, wie zum Beispiel Teilnehmeranschlußlage-Teilneh-merrufnummer-Zuordnungen, Teilnehmerberechti-gungen und technischen Merkmale von angeschlossenen Verbindungsleitungen und dergleichen, sowie Programminformationen, die für die Abwick-lung der vermittlungstechnischen Funktionen maßge-bend sind, werden zunächst entsprechenden Speichern der beiden zentralen Prozessoren eingegeben und werden von hier aus beim Inbetriebgehen eines zentralen Prozessors zu den dezentralen Steuereinrichtungen der verschiedenen Anschlußgruppen übertragen und hier gespeichert. Diese Übertragung und Speicherung erfolgt pro Anschlußgruppe einzeln, das heißt für die dezentralen Steuereinrichtungen der verschiedenen Anschlußgruppen einzeln nacheinander. Der hierfür erforderliche Zeitaufwand bei Einschaltung einer Vermittlungsstelle ist im Vergleich zu den in Zusammenhang mit der Einrichtung einer Vermittlungsstelle erforderlichen gesamten Arbeiten verschwindend gering. Stärker fällt dieser Zeitaufwand jedoch ins Gewicht im Falle einer Ersatzschaltung des zentralen Prozessors und des zentralen Koppelfeldes. Für diesen Fall ist ebenso vorgesehen, die dezentralen Steuereinrichtungen der Anschlußgruppen mit den im zentralen Prozessor gespeicherten vermittlungstechnischen Informationen und Programminformationen zu laden, um mit Sicherheit einen völligen Gleichlauf zwischen diesen Informationen, die also einerseits im neu in Betrieb gehenden zentralen Prozessor und andererseits in den dezentralen Steuereinrichtungen gespeichert sind, zu gewährleisten. Hierdurch werden jegliche Abweichungen ausgeschlossen,die sonst entstehen könnten, bezüglich dieser vermittlungstechnischen Informationen und dieser Programminformationen, die also einerseits im in betrieb gehenden zentralen Prozessor und andererseits in den dezentralen Steuereinrichtungen jeder der verschiedenen Anschlußgruppen gespeichert sind. Solche Abweichungen könnten zum Beispiel dadurch entstehen, daß zwischenzeitlich Änderungen an diesen vermittlungstechnischen Informationen und/oder Programminformationen vorgenommen werden, oder auch dadurch, daß in den dezentralen Steuereinrichtungen diese Informationen durch irgendwelche Störeinflüsse verfälscht worden sind. Solche Abweichungen werden aber mit Sicherheit ausgeschlossen durch ein erneutes Laden sämtlicher dezentraler Steuereinrichtungen mit den Programminformationen und den vermittlungstechnischen Informationen seitens des in Zusammenhang mit der vorgesehenen Ersatzschaltung neu in Betrieb gehenden zentralen Prozessors.

Um nun den Vorgang des beschriebenen Ladens der Programminformationen und der vermittlungstechnischen Informationen aus dem in Zusammenhang mit einer vorgesehenen Ersatzschaltung neu in Betrieb gehenden zentralen Prozessor in die dezentralen Steuereinrichtungen der verschiedenen Anschlußgruppen zeitlich abzukürzen, ist vorgesehen, daß jeweils zwei Anschlußgruppen paarweise einander zugeordnet sind, daß in jeder derselben zum außenseitigen Anschluß von Teilnehmer- und/oder Verbindungsleitungen dienenden und innerhalb der jeweiligen Anschlußgruppe im Normalbetrieb mit ihrem Teilkoppelfeld verbundene Anschlußeinheiten im Notbetrieb teilweise umschaltbar sind. Es wird also Gebrauch gemacht von der bereits weiter oben im einzelnen beschriebenen technischen Verfahrensweise, wobei die erläuterte Umschaltung vom Normalbetrieb auf den Notbetrieb bei sämtlichen Anschlußgruppen in die Wege geleitet wird. Dadurch werden also die Anschlußeinheiten jeweils einer ersten von zwei paarweiseeinander zugeordneten Anschlußgruppen zusätzlich an das Teilkoppelfeld der jeweils anderen, also einer jeweils zweiten Anschlußgruppe angeschaltet, was bei sämtlichen paarweise einander zugeordneten Anschlußgruppen gleichermaßen stattfindet. Dabei wird für die über die umgeschalteten Anschlußeinheiten verlaufenden Verbindungen die entsprechende Schaltkennzeichenbearbeitung sowie Teilkoppelfeld-Eisntellung ebenfalls von der dezentralen Steuereinrichtung der jeweils anderen, also zweiten Anschlußgruppe durchgeführt.

In dieser Betriebssituation bedient also innerhalb von zwei paarweise einander zugeordneten Anschlußgruppen die dezentrale Steuereinrichtung nur einer derselben sämtliche Anschlußeinheiten, wie zum Beispiel Teilnehmeranschlußschaltungen, Mehrfachteilnehmeranschlußschaltungen, Verbindungsleitungsabschlußschaltungen, die auch Verbindungsleitungsmehrfachabschlußschaltungen sein können und dergleichen. In dieser Betriebssituation werden auch sämtliche Verbindungen, die über die Anschlußeinheiten beider Anschlußgruppe hergestellt werden, über das Teilkoppelfeld nur der einen der beiden Anschlußgruppen durchgeschaltet. Ausgehend davon, daß in dieser Betriebssituation die Anschlußeinheiten jeweils einer ersten dieser beiden Anschlußgruppen zusätzlich an das Teilkoppelfeld der jeweils anderen Anschlußgruppe angeschaltet werden, erfolgt also die gesamte Verbindungsherstellung über das Teilkoppelfeld der zweiten Anschlußgruppe mit Hilfe von ihrer dezentralen Steuereinrichtung. Dabei sind die beiden Anschlußgruppen an sich völlig gleichberechtigt, das heißt diese Umschaltung kann bezüglich dieser beiden Anschlußgruppen auch umgekehrt erfolgen. Die gesamte weitere Betriebsabwicklung erfolgt dann vorläufig in der gleichen Weise, wie in dem weiter oben detailliert beschriebenen Notbetrieb. In dieser Betriebssituation befinden sich sämtliche Anschlußgruppen gleichsam im Notbetrieb.

Nach Herstellung des Notbetriebszustandes ist die Hälfte sämtlicher dezentraler Steuereinrichtungen dem Vermittlungsbetrieb entzogen, ebenso auch die Hälfte sämtliche Teilkoppelfelder, und zwar jeweils eine dezentrale Steuereinrichtung und jeweils das ihm zugeordnete Teilkoppelfeld pro Paar von Anschlußgruppen.

Eine Ersatzschaltung eines der beiden zentralen Prozessoren durch den jeweils anderen zentralen Prozessor wird also noch während zunächst weiterlaufendem Betrieb des bis dahin in Betrieb befindlichen zentralen Prozessors dadurch vorbereitet, daß sämtliche paarweise einander zugeordneten Anschlußgruppen vom Normalbetrieb in den Notbetrieb übergeführt werden; ferner stellt der andere zentrale Prozessor Datenverbindungen über das ihm zugeordnete andere Zentrale Koppelfeld zu den dezentralen Steuereinrichtungen aller ersten Anschlußgruppen her. Dies geschieht in der weiter oben bereits beschriebenen Weise. Diese Verbindungen werden also zu den dezentralen Steuereinrichtungen aller derjenigen Anschlußgruppen hergestellt, deren Anschlußeinheiten jeweils zum Teilkoppelfeld der paarweise zugeordneten anderen Anschlußeinheit umgeschaltet worden sind, also derjenigen Anschlußgruppen, deren dezentrale Steuereinrichtungen und deren Teilkoppelfelder in Zusammenhang mit der in vorbereitung befindlichen Ersatzschaltung dem normalen Vermittlungsbetrieb entzogen worden sind.

Über die zuvor beschriebenen neu hergestellten Datenverbindungen lädt nun der in Zusammenhang mit der bevorstehenden Ersatzschaltung neu in Betrieb gehende zentrale Prozessor die gesamten Programminfoimationen und die gesamten vermittlungstechnischen Informationen in die betreffenden dezentralen Steuereinrichtungen, bzw. in entsprechende Speicher derselben. Dieser zentrale Prozessor überträgt also anschließend nacheinander an die betreffenden dezentralen Steuereinrichtungen, die zur Zeit dem regulären Vermittlungsbetrieb entzogen sind, die für ihren erneuten Betriebsbeginn erforderliche Programm- und Vermittlungs-Software zwecks Speicherung derselben in ihnen. Dies geschieht seitens des in Zusammenhang mit der bevorstehenden Ersatzschaltung in Betrieb gehenden zentralen Prozessors bereits vorbereitend während einer Übergangszeit, in der der andere zentrale Prozessor noch den Vermittlungsbetrieb mit denjenigen dezentralen Steuereinrichtungen und Teilkoppelfeldern fortführt, die hierzu vom Normalbetrieb in den Notbetrieb übergeführt worden sind zwecks Vorbereitung der beabsichtigten Ersatzschaltung.

Sind die zuvor beschriebenen, eine Ersatzschaltung vorbereitenden Vorgänge des Ladens von Programminformationen und vermittlungstechnischen Informationen abgewickelt, so erfolgt die Ersatzschaltung. Dabei geht in bekannter Weise die Gesamtheit der zentralen Datenverarbeitungs- und Steuerfunktionen von dem einen zentralen Prozessor auf den anderen zentralen Prozessor über, wobei auch das eine zentrale Koppelfeld durch das andere zentrale Koppelfeld ersetzt wird. Dabei kann vorgesehen werden, daß bereits bestehende Verbindungen bestehen bleiben können bis zu ihrer Auslösung. Sämtliche neue Verbindungen werden dann mit Hilfe der neu geladenen dezentralen Steuereinrichtung hergestellt, und zwar über die ihnen jeweils zugeordneten Teilkoppelfelder. Die anderen dezentralen Steuereinrichtungen und die ihnen zugeordneten Teilkoppelfelder werden für weitere Verbindungsherstellungen nicht mehr benutzt. In diesem Zusammenhang erfolgt dann eine Umschaltung innerhalb der Anschlußgruppen mit Hilfe der in Figur 2 dargestellten Umschaltekontakte 1d1 bis 2d4. Anschließend wird der Vermittlungsbetrieb also fortgesetzt mit Hilfe derjenigen dezentralen Steuereinrichtungen, die bis zur erfolgten Ersatzschaltung dem normalen Vermittlungsbetrieb entzogen war und über die zugeordneten Teilkoppelfelder. Diejenigen dezentralen Steuereinrichtungen und zugeordneten Teilkoppelfelder, die bis zum Zeitpunkt der Ersatzschaltung den Vermittlungsbetrieb im Quasi-Notbetrieb fortgeführt haben, gehen zunächst außer Betrieb. Dann aber baut derjenige zentrale Prozessor, der in Zusammenhang mit der Ersatzschaltung in Betrieb gegangen ist, nacheinander auch Datenverbindungen zu allen denjenigen dezentralen Steuereinrichtungen auf, die in Zusammenhang mit der erfolgten Ersatzschaltung zunächst außer Betrieb gegangen sind. Anschließend lädt der zentrale Prozessor die erforderlichen Programminformationen und vermittlungstechnischen Informationen auch in die Speicher dieser dezentralen Steuereinrichtungen. Dies geschieht zeitlich eingestreut in die normalen Vermittlungsvorgänge. Nachdem der dezentrale Prozessor sämtliche dezentralen Steuereinrichtungen mit den erforderlichen Programminformationen und den betreffenden vermittlungstechnischen Informationen geladen hat, wird sukzessive nacheinander bei den paarweise einander zugeordneten Anschlußgruppen die Betriebsweise wieder vom Notbetrieb in den Normalbetrieb zurücküberführt.

## Patentansprüche

1. Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld (K1, K2) samt einem unter anderem dessen Steuerung sowie einer hierfür erforderlichen Schaltkennzeichenverarbeitung dienenden programmgesteuerten zentralen Prozessor (ZW1, ZW2) zur Ersatzschaltemöglichkeit zweifach vorgesehen ist, und in denen eine Mehrzahl von dezentralen Anschlußgruppe (LTG1, LTG2) mit je einem Teilkoppelfeld (GS1, GS2) zum außenseitigen Anschluß von Verbindungs- und/oder Teilnehmerleitungen und mit einer dezentralen programmierbaren Steuereinrichtung (GP1, GP2) zur Schaltkennzeichenaufnahme von diesen Leitungen, zur Schaltkennzeichenvorverarbeitung und -weiterleitung an den zentralen Prozessor (ZW1, ZW2) und zur Schaltkennzeichenaussendung auf diese Leitungen ausgestattet ist, und in denen in jeder dieser Anschlußgruppen (LTG1, LTG2) das jeweilige Teilkoppelfeld (GS1, GS2) innenseitig über zwei Gruppen von Linkleitungen gruppenweise (L1/1, L1/2, L2/1, L2/2) getrennt mit Koppelfeldanschlüssen einerseits des einen und andererseits des anderen der beiden parallel vorgesehenen Koppelfelder (K1, K2) verbunden ist, und in denen für einen der obigen Schaltkennzeichenbehandlung dienenden sowie der Übertragung von Programm- und Vermittlungs-Software dienenden Datenaustausch zwischen den dezentralen Steuereinrichtungen einerseits und dem jeweils betriebsbereiten bzw. betriebsvorbereitenden Prozessor andererseits Datenverbindungen jeweils pro dezentrale Steuereinrichtung von jenem über das ihm zugeordnete Koppelfeld zu den dezentralen Steuereinrichtungen in betriebsbereiten Zustand gebracht bzw. in ihm gehalten werden, wofür eine mit dem zentralen Prozessor (ZW1, ZW2) verbundene Eingabe-Ausgabe-Einrichtung (G1, G2) vorgesehen ist, die mit einer Mehrzahl und zwar pro Datenverbindung vorgesehenen Link-Anschlüssen einzeln wie die Link-Leitungen mit Koppelfeldanschlüssen fest verbunden ist, **dadurch gekennzeichnet,**
daß jeweils zwei Anschlußgruppen (LTG1, LTG2) paarweise einander zugeordnet sind, daß in jeder derselben zum außenseitigen Anschluß von Teilnehmer- und/oder Verbindungs-Leitungen dienende und innerhalb der jeweiligen Anschlußgruppe im Normalbetrieb mit ihrem Teilkoppelfeld verbundene Anschlußeinheiten, z.B. Teilnehmeranschlußschaltungen, Mehrfachteilnehmeranschlußschaltungen, Verbindungsleitungs abschlußschaltungen, im Notbetrieb teilweise umschaltbar sind, wodurch die Anschlußeinheiten jeweils einer ersten dieser beiden Anschlußgruppen (LTG1) notbetriebsbedingt zusätzlich an das Teilkoppelfeld (GS2) der jeweils anderen, also einer jeweils zweiten Anschlußgruppe (LTG2) angeschaltet werden, und wodurch für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung (GP2) der anderen, also zweiten Anschlußgruppe (LTG2) durchgeführt wird, und daß eine Ersatzschaltung eines der beiden zentralen Prozessoren (ZW1) noch während zunächst weiterlaufendem Betrieb desselben durch den anderen der beiden Prozessoren (ZW2) dadurch vorbereitet wird, daß sowohl sämtliche paarweise einander zugeordneten Anschlußgruppen vom Normalbetrieb in den Notbetrieb übergeführt werden, als auch der andere zentrale Prozessor (ZW2) Datenverbindungen über das ihm zugeordnete zentrale Koppelfeld (K2) zu den dezentralen Steuereinrichtungen (GP1) aller ersten Anschlußgruppen (LTG1) in betriebsbereiten Zustand bringt und anschließend nacheinander an die dezentralen Steuereinrichtungen die für ihren Betriebsbeginn erforderliche Programm- und Vermittlungs-Software zur Speicherung in ihnen überträgt, und daß nach erfolgter Ersatzschaltung der dadurch in Betrieb gehende andere Prozessor mit den dezentralen Steuereinrichtungen der zweiten Anschlußgruppe einen Notbetrieb durchführt, während dem er an die dezentralen Steuereinrichtungen der zweiten Anschlußgruppen die für ihren erneuten Betriebsbeginn erforderliche Programm- und Vermittlungs-Software an sie überträgt, und daß die betreffenden weiten Anschlußgruppen durch den genannten anderen zentralen Prozessor anschließend vom Notbetrieb in den Normalbetrieb übergeführt werden.

2. Schaltungsanordnung nach Anspruch 1, **dadurch gekennzeichnet,**
daß die der Vorbereitung einer Ersatzschaltung dienende erstmalige Überführung vom Normalbetrieb in den Notbetrieb durch denjenigen zentralen Prozessor erfolgt, für den eine Ersatzschaltung in Vorbereitung ist.

## Claims

1. Circuit arrangement for centrally controlled telecommunication exchanges, particularly PCM-time division multiplex telephone exchanges, in which a central switching network (K1, K2), used for the throughconnection of calls, together with a program controlled central processor (ZW1, ZW2), duplicated to provide a changeover to standby capability, used, inter alia, for controling the central switching network and switching signal processing required for this purpose, and in which is installed a number of decentralized line trunk groups (LTG1, LTG2), each having a group switch (GS1, GS2) for the external connection of junction lines and/or subscriber lines and having a decentralized programmable control device (GP1, GP2), for recording switching signals on these lines, for preprocessing switching signals and passing them on to a central processor (ZW1, ZW2) and for the transmission of switching signals on these lines, and in which is connected, in each of these line trunk groups (LTG1, LTG2), the associated group switch (GS1, GS2) on the inside, via two groups of link lines separated into groups (L1/1, L1/2, L2/1, L2/2), the central switching network connections on the one side of one and the other side of the other, and of the two parallel connected central switching networks (K1, K2), and in which data connections for each decentralized control device are brought to, or maintained in, readiness, for a data exchange serving the above switching signal processing and serving the transmission of program and switching software, between the decentralized control devices, on the one hand, and the associated processor, which is either ready or being prepared for readiness, via the associated central switching network to the decentralized control devices, for which an input/output device (G1, G2) connected to the central processor (ZW1, ZW2) is provided, which is permanently connected to a multiplicity of link connections, provided individually per data connection, as the links to the central switching network connections,
characterized in that
in each case two line trunk groups (LTG1, LTG2) are associated with one another in pairs, in that each of these line units which are connected to the group switches in normal operation, for instance subscriber line circuits, multiple subscriber line circuits, junction line terminating circuits can be partially switched over in emergency operation, and are used for external connections of subscriber or junction lines, as a result of which the line units of in each case a first of these two line trunk groups (LTG1) are additionally connected, for emergency operation, to the group switch (GS2) of the other, that is to say second line trunk group (LTG2) and, as a result of which the corresponding switching signal processing for the connections running through the switched-over line units is carried out, together with group switch setting, also from the decentralized control device (GP2) of the other, that is, second line trunk group (LTG2), and in that a changeover to standby of one of the two central processors (ZW1) is prepared, initially still during its continued use, by the other of the two processors (ZW2), in that all the pairs of mutually associated line trunk groups in normal operation are transferred to emergency operation, the other central processor (ZW2) brings the data connections to the ready state, via the central switching network (K2) associated with it, to the decentralized control devices (GP1) of all the first line trunk groups (LTG1) and, subsequently, sequentially transmits the program and switching software required to commence operation, to the decentralized control devices, for storage in them, and in that after changeover to standby has been carried out, the other processor, which has hence been brought into use, carries out an emergency operation together with the decentralized control devices of the second line trunk group, while it transmits the program and switching software required by the decentralized control devices of the second line trunk group for them to recommence operation to them, and in that the relevant second line trunk groups are transferred back from emergency operation to normal operation, at this point, by the other named central processor.

2. Circuit arrangement according to Claim 1, characterized in that
the initial changeover from normal operation to emergency operation which serves to prepare a changeover to standby operation, is carried out by that central processor, for which a changeover to standby operation is being prepared.

## Revendications

1. Montage pour des centraux de télécommunications, notamment des centraux téléphoniques à multiplexage temporel MIC, à commande centralisée, dans lesquels un champ de couplage central (K1,K2), utilisé pour l'interconnexion directe de liaisons, ainsi qu'un processeur central (ZW1, ZW2), commandé par programme et utilisé notamment pour la commande du champ de couplage ainsi que pour le traitement, nécessaire à cet effet, d'indicatifs de commutation, sont prévus en double de manière à permettre un branchement de remplacement, et dans lesquels une multiplicité de modules de raccordement (LTG1,LTG2) décentralisés sont équipés respectivement d'un champ de couplage partiel (GS1,GS2) pour le raccordement, côté extérieur, de lignes de jonction et/ou de lignes d'abonnés, et d'un dispositif décentralisé de commande programmable (GP1,GP2) pour la réception d'indicatifs de commutation en provenance de ces lignes, pour le prétraitement d'indicatifs de commutation et pour la retransmission de ces derniers au processeur central (ZW1, ZW2) et pour l'émission d'indicatifs de commutation en direction de ces lignes, et dans lesquels, dans chacun de ces modules de raccordement (LTG1,LTG2), les champs de couplage partiel respectifs (GS1,GS2) sont raccordés, côté intérieur, par l'intermédiaire de deux groupes de lignes de liaison, d'une manière séparée par groupe (L1/1,L2/1,L2/2), à des bornes, d'une part, d'un premier, et, d'autre part, de l'autre des deux champs de couplage (K1,K2) montés en parallèle, et dans lesquels, pour un échange de données utilisé pour le traitement, indiqué précédemment, d'indicatifs de commutation et pour la transmission d'un logiciel de programmes et de commutation, entre les dispositifs décentralisés de commande, d'une part, et le processeur, qui est respectivement prêt au fonctionnement ou préparé pour le fonctionnement d'autre part, des liaisons de transmission de données sont placées dans l'état prêt à fonctionner ou sont maintenues dans cet état respectivement pour chaque dispositif décentralisé de commande, chaque champ de couplage, qui est associé à ce processeur, aux dispositifs décentralisés de commande, et dans lesquels, à cet effet, il est prévu un dispositif d'entrée et/ou de sortie (G1,G2), qui est relié au processeur central (ZW1,ZW2) et est raccordé de façon fixe à une multiplicité de bornes de liaison, prévues en général pour chaque liaison de transmission de données, individuellement comme les lignes de liaison aux bornes du champ de couplage,
caractérisé par le fait que
respectivement deux modules de raccordement (LTG1,LTG2) sont associés entre eux par couples, que, dans chacun de ces modules, des unités de raccordement, par exemple des circuits de raccordement d'abonnés, des circuits de raccordement d'abonnés multiples, des circuits de terminaison de lignes de jonction, qui sont utilisées pour le raccordement, côté extérieur, de lignes d'abonnés et/ou de lignes de jonction et sont raccordées, dans le module de raccordement respectif, dans le cas du fonctionnement normal, au champ de couplage partiel de ce module, peuvent être en partie commutées dans le cas d'un fonctionnement de secours, ce qui a pour effet que les unités de raccordement respectivement d'un premier (LTG1) de ces deux modules de raccordement sont en outre raccordées, d'une manière conditionnée par le fonctionnement de secours, au champ de couplage partiel (GS2) de l'autre module respectif de raccordement, c'est-à-dire un second module respectif de raccordement (LTG2), et que, pour les liaisons qui passent par les unités de raccordement commutées, le traitement correspondant d'indicatifs de commutation et le réglage correspondant des champs de couplage partiels sont également exécutés par le dispositif décentralisé de commande (GP2) de l'autre, c'est-à-dire du second module de raccordement (LTG2), et qu'un branchement de remplacement de l'un des deux processeurs centraux (ZW) est préparé pendant le fonctionnement, qui tout d'abord se poursuit, de ce processeur par l'autre (ZW2) des deux processeurs de sorte qu'aussi bien tous les modules de raccordement associés entre eux par couples sont commutés du fonctionnement normal au fonctionnement de secours, et qu'également l'autre processeur central (ZW2) place dans l'état prêt au fonctionnement, des liaisons de transmission de données par l'intermédiaire du champ de couplage central (K2), qui lui est associé, en direction des dispositifs décentralisés de commande (GP1) de tous les premiers modules de raccordement (LTG), et transmet ensuite successivement, aux dispositifs décentralisés de commande, le logiciel de programme et de commutation nécessaire pour le début de leur fonctionnement, en vue de la mémorisation de ce logiciel dans ces dispositifs, et qu'une fois réussie la commutation de remplacement, l'autre processeur, qui est de ce fait mis en fonctionnement, exécute, avec les dispositifs décentralisés de commande du second module de raccordement, un fonctionnement de secours pendant lequel il transmet aux dispositifs décentralisés des seconds modules de raccordement, le logiciel de programme et de commutation nécessaire pour un nouveau démarrage de fonctionnement de ces dispositifs, et que les seconds modules de raccordement sont ensuite commutés du fonctionnement de secours au fonctionnement normal, par ledit autre processeur central.

2. Montage suivant la revendication 1, caractérisé par le fait que

le passage, effectué pour la première fois et utilisé pour la préparation d'une commutation, du fonctionnement normal au fonctionnement de secours, s'effectue au moyen du processeur central, pour lequel une commutation de remplacement est en préparation.

# FIG 1

# FIG 2